# FASCICULE DE BREVET EUROPEEN

(11) **EP 2 368 786 B1**
(45) Date de publication et mention de la délivrance du brevet: **22.08.2012**
(21) Numéro de dépôt: 11164811.9
(22) Date de dépôt: 31.08.2005
(51) Int. Cl.: B62D 29/00, B29C 45/14

(54) **Face avant technique comportant un insert métallique et une partie en matière plastique**
Technisches Front-End, das ein Metalleinsatzteil und ein Plastikteil umfasst
Technical front-end including a metal insert and a part made of plastic material

(30) Priorité: 03.09.2004 FR 0409360
(43) Date de publication de la demande: 28.09.2011
(62) Demande divisionnaire de: 05291816.6
(73) Titulaire: Faurecia Bloc Avant, 92000 Nanterre (FR)
(72) Inventeur: Frey, Stéphane, 70400 FRAHIER CHATEBIER (FR); Brugiere, Nicolas, 68180 HORBOURG WIHR (FR); Girolimetto, Yves, 25260 Etouvans (FR)
(74) Mandataire: Blot, Philippe Robert Emile

(56) Documents cités:
- EP-A- 0 976 519
- US-A- 5 580 122
- US-B1- 6 378 268
- PATENT ABSTRACTS OF JAPAN vol. 2000, no. 1, 31 janvier 2000 (2000-01-31) -& JP 11, 298158, A, (TOHOKU MUNEKATA CO LTD), 29 octobre 1999 (1999-10-29)

## Description

L'invention concerne une face avant technique comportant un insert métallique et une partie en matière plastique surmoulée sur l'insert métallique , typiquement pour véhicule automobile..

Dans de nombreuses industries et en particulier dans l'industrie automobile, on fabrique et l'on utilise des pièces hybrides comportant un insert métallique et une partie en matière plastique surmoulée sur l'insert métallique.

En particulier, on réalise sous forme de pièces hybrides des éléments de construction qui peuvent être de grandes dimensions tels que des faces avant techniques fixées sur une structure de véhicule automobile, dans une disposition transversale, à l'avant du moteur.

Les faces avant techniques constituent des éléments de support pour des pièces de carrosserie et des composants tels que des blocs optiques, pare-chocs, calandres, échangeurs de chaleur, avertisseurs et serrures de capot. Les sous-ensembles ainsi obtenus, appelés blocs avant, permettent de fixer l'ensemble des composants et appareils en une seule opération sur la ligne de fabrication des véhicules automobiles. Les blocs avant peuvent être fabriqués dans un atelier du constructeur automobile ou chez des équipementiers.

La réalisation sous forme hybride des faces avant s'est imposée comme une solution permettant de satisfaire des exigences généralement contraires quant aux propriétés de l'élément de structure, par exemple des exigences de légèreté et de résistance mécanique, en particulier aux chocs.

Les faces avant techniques, de forme généralement plane, sont fixées à la partie antérieure de deux longerons du véhicule automobile et reliées le plus souvent aux ailes avant du véhicule, dans un plan transversal vertical YZ du véhicule automobile. Lorsqu'elles sont réalisées sous forme hybride de telles faces avant comportent une plaque en matière plastique rendue solidaire par surmoulage d'un élément de renfort en métal s'étendant suivant la direction longitudinale de la face avant, c'est-à-dire la direction transversale du véhicule automobile. L'élément métallique de renfort est généralement réalisé sous la forme d'un profilé ayant une section transversale en forme de canal. La matière plastique surmoulée est rendue solidaire de l'élément métallique de renfort, en particulier suivant les bords longitudinaux du profilé en forme de canal, par l'intermédiaire de trous traversant les parois du canal au voisinage de leurs bords libres ou de tronçons de la paroi du canal métallique repliés d'un seul côté des parois du canal.

De tels modes d'accrochage de la matière plastique surmoulée sur l'élément métallique ne permettent généralement pas d'obtenir une liaison très résistante du fait que les ouvertures suivant le bord du canal ne peuvent être prévues que dans des zones espacées, dans le cas du premier mode de réalisation, et que les tronçons repliés du bord du canal, dans le cas du second mode de réalisation, ne peuvent être entièrement noyés dans la matière plastique, pour qu'on puisse assurer le démoulage sans prévoir de parties complexes en contredépouille.

On ne disposait donc pas jusqu'ici de face avant technique de véhicule automobile adaptée pour la réalisation par surmoulage d'un accrochage très résistant entre un insert métallique et une partie en matière plastique.

US 6 378 268 décrit une face avant technique conforme au préambule de la revendication 1. JP 11-298 158 décrit une pièce avec un insert métallique et une partie en matière plastique surmoulée sur l'insert métallique. L'insert métallique comporte une plaque et des languettes toutes pliées d'un même côté de la plaque.

Le but de l'invention est donc de proposer une face avant technique comportant un insert métallique et une partie en matière plastique surmoulée sur l'insert métallique dans laquelle sont noyés des éléments d'accrochage de l'insert métallique, qui permette d'obtenir une liaison très résistante entre l'insert métallique et la matière plastique, tout en étant d'une mise en oeuvre simple et permettant de réaliser facilement le démoulage de la pièce sans prévoir de formes complexes en contredépouille.

Dans ce but, l'invention porte sur une face avant technique selon la revendication 1.

Cette face avant technique est avantageusement obtenue selon le procédé de moulage suivant :
- on réalise un insert métallique ayant au moins une partie en forme de plaque sensiblement plane présentant au moins un bord libre, sur au moins un côté de l'insert métallique,
- on réalise, suivant le bord libre de la partie en forme de plaque de l'insert et suivant toute son épaisseur, des incisions successives de longueur sensiblement constante dans une direction sensiblement perpendiculaire au bord libre, espacées l'une de l'autre dans la direction du bord libre, de manière à obtenir une pluralité de zones successives de la partie en forme de plaque de l'insert séparées l'une de l'autre par une incision,
- on effectue le pliage de zones successives de la partie en forme de plaque de l'insert, le long d'une ligne sensiblement parallèle au bord libre de l'insert, passant par des extrémités des incisions opposées au bord libre pour obtenir une pluralité de languettes d'accrochage dans au moins un plan ayant une disposition angulaire par rapport à la partie en forme de plaque, séparées par des espaces libres le long du bord libre de l'insert, et d'un côté au moins de la partie en forme de plaque de l'insert,
- on place au moins une partie de l'insert comportant les languettes d'accrochage dans un moule de moulage de la pièce hybride,
- on injecte la matière plastique dans le moule de manière à noyer les languettes d'accrochage de l'insert dans la matière plastique, et
- on sépare la pièce hybride refroidie du moule par un déplacement relatif de la pièce hybride moulée et d'au moins une partie du moule dans une direction parallèle aux languettes d'accrochage.

Selon des modalités plus particulières du procédé de moulage:
- l'insert métallique est réalisé par découpage d'une tôle métallique, l'ensemble de l'insert étant sous la forme d'une plaque sensiblement plane ;
- les zones successives de la partie en forme de plaque de l'insert sont pliées à 90° par rapport au plan de la partie de l'insert en forme de plaque ;
- les zones de la partie en forme de plaque de l'insert sont pliées alternativement d'un côté et de l'autre de la partie de l'insert en forme de plaque, chacune des languettes étant disposée d'un côté de la partie de l'insert en forme de plaque, entre deux espaces libres séparant deux languettes successives repliées du même côté de la partie de l'insert en forme de plaque ;
- on injecte la matière plastique dans une partie de l'empreinte du moule dans laquelle sont introduites les languettes, de manière à obtenir une paroi de la pièce hybride renforcée par les languettes ayant une disposition angulaire par rapport à la partie de l'insert en forme de plaque ;
- on réalise le pliage des languettes à 90° par rapport à la partie de l'insert en forme de plaque et on réalise par moulage au moins une paroi en matière plastique renforcée par les languettes sensiblement perpendiculaires à la partie de l'insert en forme de plaque.

Afin de bien faire comprendre l'invention, on va décrire, à titre d'exemple, le procédé de moulage d'une pièce hybride formant une face avant du véhicule automobile, comportant un noyau métallique plan découpé dans une tôle suivant au moins un bord libre sur lequel on fixe une paroi en matière plastique sensiblement perpendiculaire à l'insert plan.

La figure 1 représente une vue en plan d'une partie d'un bord libre de l'insert plan de la pièce hybride, après réalisation d'incisions et avant pliage.

La figure 2 représente une vue en perspective du bord correspondant de l'insert plan, après pliage de languettes d'accrochage, au moment de sa mise en place dans un moule en deux parties.

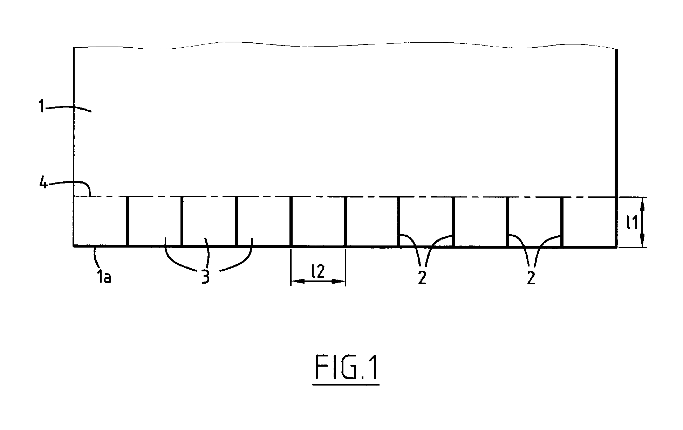

Sur la figure 1, on a représenté une partie d'un bord libre la d'un insert métallique découpé dans une tôle, par exemple en acier, pour la réalisation d'une pièce hybride.

Après découpage de l'insert dans la tôle métallique, on réalise, suivant le bord 1a de l'insert en forme de plaque plane, des incisions 2, suivant toute l'épaisseur de la plaque plane, dans une direction perpendiculaire au bord 1a et sur une longueur I₁, deux incisions 2 successives étant séparées par une distance I₂ constante.

Par exemple, la distance I₂ peut être sensiblement égale à 20 mm.

On obtient ainsi des zones successives 3 du bord de l'insert en forme de plaque, deux zones 3 successives étant séparées par une incision 2.

Chacune des incisions 2 est réalisée depuis le bord 1a de l'insert 1 sur la longueur I₁, jusqu'à la ligne 4 parallèle au bord 1a constituant une ligne de pliage des zones 3 de l'insert dans une opération ultérieure de pliage alterné.

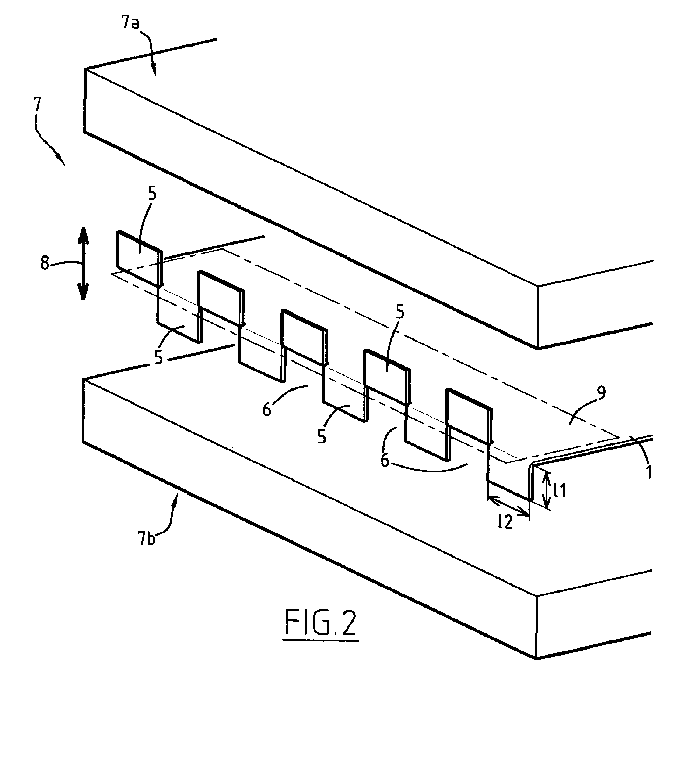

Sur la figure 2, on a représenté le bord de l'insert 1 en forme de plaque après pliage alterné des zones 3 à 90°, autour de la direction 4 parallèle au bord 1a de l'insert 1.

Les zones successives 3 sont pliées alternativement d'un côté et de l'autre de la plaque 1, c'est-à-dire à 90° par rapport à une première et à une seconde faces de l'insert. On obtient ainsi des languettes d'accrochage 5 dans un plan généralement perpendiculaire à la plaque recoupant la plaque suivant la ligne 4. Chacune des languettes 5 repliée d'un premier côté de la plaque se trouve entre deux languettes 5 repliées de l'autre côté de la plaque. Chaque languette d'accrochage 5 se trouve ainsi entre deux espaces libres 6, sur chacun des côtés de l'insert plan.

Comme il est visible sur la figure 3, l'insert 1, après pliage, est placé dans un moule, par exemple dans un moule 7 en deux parties 7a, 7b, mobiles l'une par rapport à l'autre.

Sur la figure 2, le moule 7 a été représenté à l'état ouvert, les deux parties 7a, 7b du moule étant écartées l'une de l'autre. On introduit l'insert 1 dans le moule à l'état ouvert, de manière que le bord de l'insert comportant les languettes d'accrochage 5 se trouve dans une partie de l'empreinte du moule dans laquelle pénètre la matière plastique lors du moulage. Le moule représenté de manière schématique sur la figure 2 peut comporter différentes cavités et des noyaux permettant de réaliser le moulage d'une pièce hybride de forme particulière, par exemple une face avant technique comportant des parois en matière plastique perpendiculaires à la plaque plane de l'insert 1 suivant son bord 1a sur lequel ont été prévues les languettes d'accrochage 5. Dans ce cas, la partie de l'insert 1 comportant les languettes 5 est introduite dans une partie de l'empreinte du moule assurant le moulage d'une paroi en matière plastique perpendiculairement à la plaque de l'insert 1 et sur ses deux côtés.

Après mise en place de l'insert et éventuellement de noyaux dans le moule de moulage, on referme le moule en rapprochant les deux parties 7a et 7b (flèche 8) et on injecte une matière plastique à l'intérieur du moule, en particulier dans la partie de l'empreinte dans laquelle sont introduites les languettes 5 pour le moulage de la paroi en matière plastique renforcée perpendiculaire à la plaque de l'insert 1.

La direction d'ouverture et de fermeture du moule (double flèche 8) est parallèle au plan dans lequel sont pliées les languettes 5 qui est perpendiculaire à la plaque de l'insert 1.

Par injection de matière plastique dans le moule, on réalise en particulier le remplissage de la partie d'empreinte renfermant les languettes 5 et réalisant le moulage de la paroi en matière plastique perpendiculaire à la plaque de l'insert. La zone de remplissage par la matière plastique a été représentée de manière conventionnelle par un rectangle allongé 9 sur la figure 2.

Après solidification et refroidissement de la matière plastique injectée, on ouvre le moule suivant la direction d'ouverture donnée par la double flèche 8 qui est parallèle aux languettes d'accrochage 5 totalement noyées dans la matière plastique. Le démoulage de la pièce hybride peut être effectué facilement, du fait qu'il est réalisé perpendiculairement à la plaque de l'insert 1, c'est-à-dire suivant la direction du plan des languettes 5 et de la paroi en matière plastique surmoulée renforcée par les languettes 5. En outre, l'accrochage de la matière plastique sur l'insert est réalisé de manière très résistante, puisque les languettes 5 sont totalement noyées dans la matière plastique qui remplit également les espaces libres 6 entre les languettes.

Le procédé permet donc de réaliser facilement des pièces hybrides avec une très bonne liaison entre un insert métallique et une matière plastique et comportant, en particulier, des parois en matière plastique qui peuvent être perpendiculaires à l'insert plan.

La pièce hybride qui comporte un noyau parfaitement solidarisé à la matière plastique surmoulée présente une thermodépendance faible, c'est-à-dire un effet très limité de la température d'usage sur ses fréquences propres et ses caractéristiques mécaniques.

En effet, les propriétés mécaniques d'un élément de structure sous sollicitations statiques ou vibratoires sont fortement dépendantes du module élastique de l'élément.

Le module de Young des matières plastiques dépend fortement de la température.

L'utilisation d'un noyau métallique thermiquement stable parfaitement solidaire de la matière plastique permet de réduire la thermodépendance de la pièce qui présente un comportement pratiquement constant à toutes les températures d'usage.

Dans une variante de réalisation non couverte par l'invention, on peut envisager par exemple la fabrication de pièces hybrides comportant une paroi en matière plastique renforcée sur un seul côté de la plaque plane de l'insert. Dans ce cas, on peut supprimer par découpage des languettes 5 d'un côté de la plaque, avant d'introduire l'insert dans le moule comportant une empreinte ou cavité assurant le moulage de la paroi en matière plastique dans laquelle on introduit les languettes situées d'un côté de la plaque plane de l'insert.

L'insert 1 peut être réalisé, dans son ensemble, sous la forme d'une plaque plane ou comporter, en plus de la partie plane en forme de plaque, d'autres parties non planes ou d'autres parties rapportées.

Il serait également possible de réaliser des incisions et découpages pour obtenir par pliage des languettes d'accrochage dans une zone de la partie de l'insert en forme de plaque plane qui n'est pas située suivant un bord libre de l'insert.

## Revendications

1. Face avant technique comportant un insert métallique et une partie en matière plastique surmoulée sur l'insert métallique dans laquelle sont noyés des éléments d'accrochage de l'insert métallique, l'insert métallique (1) comportant au moins une partie en forme de plaque sensiblement plane, les éléments d'accrochage (5) de l'insert métallique (1) étant constitués par des zones (3) découpées dans la partie de l'insert (1) en forme de plaque et pliées en dehors du plan de la partie de l'insert (1) en forme de plaque, de manière à obtenir une pluralité de languettes (5) situées sensiblement dans un même plan ayant une disposition angulaire par rapport au plan de la partie de l'insert (1) en forme de plaque, chacune des languettes (5) étant disposée d'un côté de la partie de l'insert (1) en forme de plaque, entre deux espaces libres (6) séparant deux languettes (5) successives repliées du même côté de la partie de l'insert (1) en forme de plaque, **caractérisé par le fait que** les zones successives (3) de la partie en forme de plaque de l'insert (1) sont pliées à 90° par rapport au plan de la partie de l'insert (1) en forme de plaque et **par le fait que** les zones (3) de la partie en forme de plaque de l'insert (1) sont pliées alternativement d'un côté et de l'autre de la partie de l'insert (1) en forme de plaque.

## Claims

1. A technical front end comprising a metallic insert and a part made of plastic material over-moulded on the metallic insert in which anchorage elements of the metallic insert are immersed, the metallic insert (1) comprising at least one part in the form of a substantially planar plate, the anchoring elements (5) of the metallic insert (1) being formed by zones (3) that are cut in the insert part (1) in the form of a plate and folded out of the plane of the insert part (1) in the form of a plate (1) such as to obtain a plurality of tongues (5) located substantially in the same plane with an angular arrangement in relation to the plane of the insert part (1) in the form of a plate, each of the tongues (5) being arranged on one side of the insert part (1) in the form of a plate between two free spaces (6) separating two successive tongues (5) folded on the same side of the insert part (1) in the form of a plate, **characterised by** the fact that the successive zones (3) of the part in the form of a plate of the insert (1) are folded by 90° in relation to the plane of the insert part (1) in the form of a plate and by the fact that the zones (3) of the insert part (1) in the form of a plate are folded alternatively on one side and the other of the insert part (1) in the form of a plate.

## Patentansprüche

1. - Technisches Front-End, das ein Metalleinsatzteil und einen auf das Metalleinsatzteil aufgegossenen Plastikteil umfasst, in den Befestigungselemente des Metalleinsatzteils eingebettet sind, wobei das Metalleinsatzteil (1) wenigstens einen im Wesentlichen ebenen plattenförmigen Abschnitt umfasst und dabei die Befestigungselemente (5) des Metalleinsatzteils (1) durch Zonen (3) gebildet werden, eingeschnitten in den plattenförmigen Abschnitt des Einsatzteils (1) und herausgebogen aus der Ebene des plattenförmigen Abschnitts des Einsatzteils (1), um auf diese Weise eine Vielzahl Zungen (5) herzustellen, angeordnet im Wesentlichen in einer Ebene, die mit der Ebene des plattenförmige Abschnitts des Einsatzteils (1) einen Winkel bildet, wobei jede der Zungen (5) auf einer Seite des plattenförmigen Abschnitts des Einsatzteils (1) zwischen zwei freien bzw. leeren Räumen (6) angeordnet ist, die zwei auf dieselbe Seite des plattenförmigen Abschnitts des Einsatzteils (1) gebogene sukzessive Zungen (5) trennen dadurch gekennzeichet, dass die sukzessiven Zonen (3) des plattenförmigen Abschnitts des Einsatzteils (1) um 90° umgebogen sind in Bezug auf den plattenförmigen Abschnitt des Einsatzteils (1), und dadurch, dass die Zonen (3) des plattenförmigen Abschnitts des Einsatzteils (1) abwechselnd auf die eine und die andere Seite des plattenförmigen Abschnitts des Einsatzteils (1) umgebogen sind.
